(19) Europäisches Patentamt / European Patent Office / Office européen des brevets

(11) **EP 4 287 078 B1**

(12) **EUROPEAN PATENT SPECIFICATION**

(45) Date of publication and mention
of the grant of the patent:
**11.03.2026 Bulletin 2026/11**

(21) Application number: **21922806.1**

(22) Date of filing: **27.01.2021**

(51) International Patent Classification (IPC):
**G06N 7/00** *(2023.01)*    **G06V 10/84** *(2022.01)*
**G06V 40/20** *(2022.01)*    **G06F 18/20** *(2023.01)*
**G06N 3/045** *(2023.01)*    **G06N 20/00** *(2019.01)*
**G06V 10/62** *(2022.01)*    **G06V 10/778** *(2022.01)*

(52) Cooperative Patent Classification (CPC):
**G06V 10/85; G06N 3/045; G06N 7/00; G06N 20/00;
G06V 10/62; G06V 10/7784; G06V 40/23;
G06V 40/28**

(86) International application number:
**PCT/JP2021/002817**

(87) International publication number:
**WO 2022/162782 (04.08.2022 Gazette 2022/31)**

(54) **DEVICE FOR BUILDING MODEL FOR ESTIMATING ACTION INTERVAL, METHOD FOR BUILDING MODEL FOR ESTIMATING ACTION INTERVAL, AND PROGRAM FOR BUILDING MODEL FOR ESTIMATING ACTION INTERVAL**

VORRICHTUNG ZUM AUFBAU EINES MODELLS ZUR SCHÄTZUNG DES AKTIONSINTERVALLS, VERFAHREN ZUM AUFBAU EINES MODELLS ZUR SCHÄTZUNG DES AKTIONSINTERVALLS UND PROGRAMM ZUM AUFBAU EINES MODELLS ZUR SCHÄTZUNG DES AKTIONSINTERVALLS

DISPOSITIF POUR CONSTRUIRE UN MODÈLE POUR ESTIMER UN INTERVALLE D'ACTION, PROCÈDÉ POUR CONSTRUIRE UN MODÈLE POUR ESTIMER UN INTERVALLE D'ACTION ET PROGRAMME POUR CONSTRUIRE UN MODÈLE POUR ESTIMER UN INTERVALLE D'ACTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.12.2023 Bulletin 2023/49**

(73) Proprietor: **FUJITSU LIMITED**
**Kawasaki-shi, Kanagawa 211-8588 (JP)**

(72) Inventors:
• **FUJIMOTO, Junya**
  **Kawasaki-shi, Kanagawa 211-8588 (JP)**
• **NAKAYAMA, Osafumi**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(56) References cited:
**WO-A1-2020/050111**

• **XIAOCHUN LUO ET AL: "Capturing and Understanding Workers' Activities in Far-Field Surveillance Videos with Deep Action Recognition and Bayesian Nonparametric Learning", COMPUTER-AIDED CIVIL AND INFRASTRUCTURE ENGINEERING, BLACKWELL PUBLISHERS, MALDEN, US, vol. 34, no. 4, 8 October 2018 (2018-10-08), pages 333 - 351, XP072008323, ISSN: 1093-9687, DOI: 10.1111/MICE.12419**

- MATTHEW J JOHNSON ET AL: "Bayesian nonparametric hidden semi-Markov models", JOURNAL OF MACHINE LEARNING RESEARCH, MIT PRESS , CAMBRIDGE , MA, US, vol. 14, no. 1, 1 February 2013 (2013-02-01), pages 673 - 701, XP058035192, ISSN: 1532-4435
- WANG LIMIN ET AL: "Temporal Segment Networks: Towards Good Practices for Deep Action Recognition", 17 September 2016, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 20 - 36, ISBN: 978-3-540-74549-5, XP047356384
- CAULI NINO ET AL: "Survey on Videos Data Augmentation for Deep Learning Models", FUTURE INTERNET, vol. 14, no. 3, 16 March 2022 (2022-03-16), pages 93, XP093128228, ISSN: 1999-5903, DOI: 10.3390/fi14030093
- DUONG T V ET AL: "Activity Recognition and Abnormality Detection with the Switching Hidden Semi-Markov Model", PROCEEDINGS / 2005 IEEE COMPUTER SOCIETY CONFERENCE ON COMPUTER VISION AND PATTERN RECOGNITION, CVPR 2005 : [20 - 25 JUNE 2005, SAN DIEGO, CA], IEEE, PISCATAWAY, NJ, USA, vol. 1, 20 June 2005 (2005-06-20), pages 838 - 845, XP010817359, ISBN: 978-0-7695-2372-9, DOI: 10.1109/CVPR.2005.61
- LIAN KUANG-YOW ET AL: "Gesture Recognition Using Improved Hierarchical Hidden Markov Algorithm", 2013 IEEE INTERNATIONAL CONFERENCE ON SYSTEMS, MAN, AND CYBERNETICS, IEEE, 13 October 2013 (2013-10-13), pages 1738 - 1742, XP032557243, DOI: 10.1109/SMC.2013.299
- SUGINOHARA KAZUYA −, KEN'ICHI MOROOKA, TOKUO TSUJI, RYO KURAZUME: "Indoor Human Behavior Estimation by combining Hierarchical Hidden Markov Model and Laser Sensing System", THE JAPAN SOCIETY OF MECHANICAL ENGINEER. MAY 17−19,2015, KYOTO,JAPAN, 1 May 2015 (2015-05-01), Kyoto,Japan, pages 1 - 4, XP055960228, Retrieved from the Internet <URL:https://www.jstage.jst.go.jp/article/jsmermd/2015/0/2015__1A1-W04_1/_pdf/-char/ja> [retrieved on 20220913]

## EP 4 287 078 B1

**Description**

Technical Field

The present disclosure relates to an action segment estimation model building device, an action segment estimation model building method, and an action segment estimation model building program.

Background Art

Recognition of postures from a video of a person imaged with a normal RGB camera has become possible due to progresses in deep learning technology, and various research and development is being performed into estimating actions of a person utilizing such recognition information. Under such circumstances, effort is being put into estimating time segments where a specified action occurred from time series data of postures detected from people videos.

Related Art Documents

Non-Patent Documents

Non-Patent Document 1: "Real-time Music Audio Signal to Score Alignment Using a Hybrid Hidden Semi-Markov Model and Linear Dynamical System" by Ryuichi YAMAMOTO, Shinji SAKO, and Tadashi KITAMURA, Proceedings of the International Society for Music Information Retrieval (MUS) 2012.
Non-Patent Document 2: "Hidden Semi-Markov Models" by Shun-Zheng Yu in Artificial Intelligence, Volume 174, Issue 2, February 2010, pages 215 to 243.
Non-Patent Document 3: "Efficient Parameter Estimation for Hierarchical Hidden Markov Models" by Kei WAKABAYASHI and Takao MIURA in transactions of Institute of Electronics, Information and Communication Engineers 2011.
Non-Patent Document 4: "Fujitsu Develops New "Actlyzer" AI Technology for Video-Based Behavioral Analysis", (online), November 25, 2019, Fujitsu Limited (accessed January 19, 2020), Internet (URL:https://pr.fujitsu.com/jp/news/2019/11/25.html). XIAOCHUN LUO ET AL: "Capturing and Understanding Workers' Activities in Far-Field Surveillance Videos with Deep Action Recognition and Bayesian Nonparametric Learning", COMPUTER-AIDED CIVIL AND INFRASTRUCTURE ENGINEERING, BLACKWELL PUBLISHERS, MALDEN, US, vol. 34, no. 4, 8 October 2018 (2018-10-08) discloses a hierarchical statistical method for recognizing workers' activities in far-field surveillance videos, wherein a deep action recognition method was used to recognize workers' actions, and a new fusion strategy was proposed to consider the characteristics of far-field surveillance videos.

SUMMARY OF INVENTION

Technical Problem

There is a high cost to generating teacher i of supervised data when training a model to estimate time segments of actions.

An object of one aspect of the present disclosure is to efficiently build an action segment estimation model.

Solution to Problem

In one exemplary embodiment, in a hidden semi-Markov model, observation probabilities for each type of movement of plural first hidden Markov models are learned using unsupervised learning. The hidden semi-Markov model includes plural second hidden Markov models each containing plural of the first hidden Markov models using types of movement of a person as states and with the plural second hidden Markov models each using actions determined by combining plural of the movements as states. The learnt observation probabilities are fixed, input first supervised data is augmented so as to give second supervised data, and transition probabilities of the movements of the first hidden Markov models are learned by supervised learning in which the second supervised data is employed. The learnt observation probabilities and the learnt transition probabilities are used to build the hidden semi-Markov model that is a model for estimating segments of the actions. Augmentation is performed to the first supervised data by adding teacher information of the first supervised data to each item of data generated by performing at least one out of oversampling in the time direction or oversampling in feature space.

Advantageous Effect of Invention

The first aspect of the present disclosure enables an action segment estimation model to be built efficiently.

BRIEF DESCRIPTION OF DRAWINGS

Fig. 1 is a schematic diagram illustrating an example of a hidden semi-Markov model of the present exemplary embodiment.
Fig. 2 is a block diagram illustrating an example of a functional configuration of the present exemplary embodiment.
Fig. 3 is a schematic diagram illustrating an example of states of a first hidden Markov model of the present exemplary embodiment.
Fig. 4 is a schematic diagram to explain augmentation of supervised data.
Fig. 5 is a schematic diagram to explain augmentation of supervised data.
Fig. 6 is a schematic diagram to explain augmentation of supervised data.
Fig. 7 is a schematic diagram to explain augmentation of supervised data.
Fig. 8 is a schematic diagram to explain augmentation of supervised data.
Fig. 9 is a schematic diagram to explain augmentation of supervised data.
Fig. 10 is a block diagram illustrating an example of a hardware configuration of the present exemplary embodiment.
Fig. 11 is a flowchart illustrating an example of a flow of an action segment estimation model building processing.
Fig. 12 is a flowchart illustrating an example of a flow of feature vector extraction processing.
Fig. 13 is a flowchart illustrating an example of a flow of supervised data augmentation processing.
Fig. 14 is a flowchart illustrating an example of a flow of action segment estimation processing.
Fig. 15 is a schematic diagram to explain actions of related technology.
Fig. 16 is a schematic diagram to explain an example of a hierarchical hidden Markov model of related technology.
Fig. 17 is a schematic diagram illustrating an example of an outline of related technology.
Fig. 18 is a schematic diagram illustrating an example of an outline of the present exemplary embodiment.
Fig. 19 is a schematic diagram illustrating an example of fluctuations of observation data.

Explanation of Reference Numerals

10    action segment estimation model building device
11    observation probability learning section
12    transition probability learning section
13    building section
51    CPU
52    primary storage device
53    secondary storage device

DESCRIPTION OF EMBODIMENTS

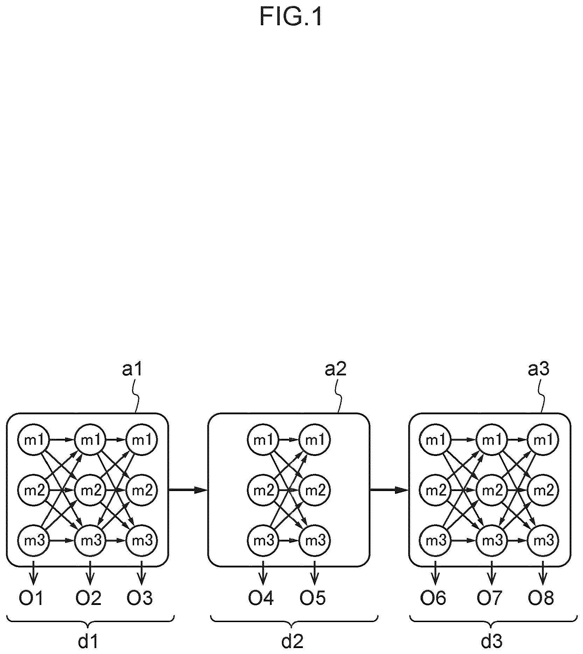

In the present exemplary embodiment, a hidden semi-Markov model (hereafter referred to as HSMM) such as that illustrated in Fig. 1 is built as an example of a partial action segment estimation model for estimating time segments in which an action of a person occurs. An HSMM has, in addition to the parameters of a hidden Markov model (hereafter referred to as HMM), a probability distribution of successive durations as parameters for each state.

The HSMM of the present exemplary embodiment includes plural first HMMs employing each movement of a person as states, and a second HMM employing actions each with a determined combination of plural movements as states. m1, m2, m3 are examples of movements, and a1, a2, a3 are examples of actions. An action is a combination of plural movements, and a movement is a combination of plural postures.

When time series sensor data generated by detecting postures of a person is given to an HSMM built by setting parameters, the HSMM estimates optimal action time segments (hereafter referred to as action segments). d1, d2, d3 are examples of action segments.

Observation probabilities and transition probabilities are present in the parameters of an HMM. O1, ..., O8 are examples of observation probabilities, and transition probabilities are the probabilities corresponding to arrows linking states. The observation probabilities are probabilities that a given feature is observed in each state, and the transition probabilities are the probabilities of transitioning from a given state to another state. Transition probabilities are not needed for cases in which an order of transition is determined. Note that the number of movements and the number of action, namely the number of the first HMMs and the number of second HMMs, are merely examples thereof, and are not limited to the numbers of the example illustrated in Fig. 1.

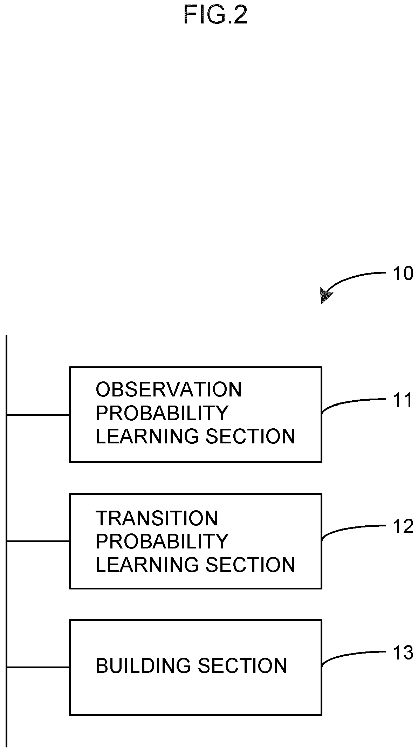

Fig. 2 is an example of a functional block diagram of an action segment estimation model building device 10 of the present exemplary embodiment. The action segment estimation model building device 10 includes an observation probability learning section 11, a transition probability learning section 12, and a building section 13. The observation probability learning section 11, as described below, uses unsupervised data to learn observation probabilities of an HSMM, which is an example of an action segment estimation model.

A target of the present exemplary embodiment is an action limited to achieving a given task goal. Such an action is, for example, an action in a standard task performed on a production line of a factory, and has the following properties.

Property 1: a difference between each action configuring a task is a difference in a combination of limited plural movements.

Property 2: plural postures observed when the same task is performed are similar to each other.

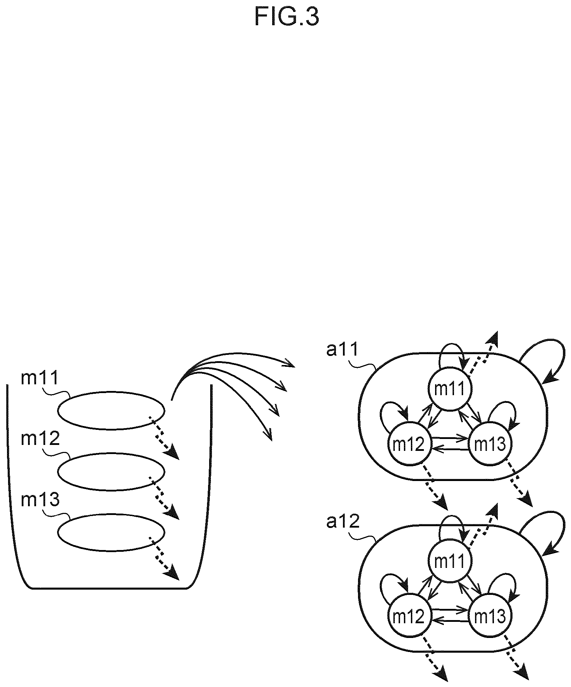

In the present exemplary embodiment, based on property 1, all actions are configured by movements contained in a single movement set. As illustrated in the example in Fig. 3, a movement set includes, for example, three movements m11, m12, m13.

For example, the movement m11 may be "raise arm", the movement m12 may be "lower arm", and the movement m13 may be "extend arm forward". The number of movements contained in the movement set is not limited to the example illustrated in Fig. 3. The number of movements contained in each action is also not limited to the examples illustrated in Fig. 3.

In the HMM of Fig. 3, action segments can be learned using unsupervised data because observation probabilities of each movement corresponding to the broken line arrows are not dependent on the action. Learning is performed, for example, using machine learning, a neural network, deep learning, or the like.

More specifically, a model employed for unsupervised learning of observation probabilities may be a Gaussian mixture model (GMM). For each observation, a single movement is selected probabilistically from out of the movements, and a Gaussian distribution is generated for this movement. This is a different assumption to supervised learning not using a time series dependency relationship of observation. The parameters of each Gaussian distribution of the trained GMM are assigned to Gaussian distributions that are probability distributions of the observation probabilities for each movement.

As described below, the transition probability learning section 12 learns the transition probabilities of the movements of the first HMMs using learning data appended with teacher information (hereafter referred to as supervised data). The teacher information is information giving a correct answer of a time segment in which each action occurs for posture time series data. The training is, for example, performed using maximum likelihood estimation and an expectation maximization algorithm (EM algorithm) or the like (another approach may also be employed therefor, such as machine learning, a neural network, deep learning, or the like).

Generating supervised data takes both time and effort. Thus in the present exemplary embodiment the learnt observation probabilities are fixed in the observation probability learning section 11, and transition probabilities are learned from the existing supervised data.

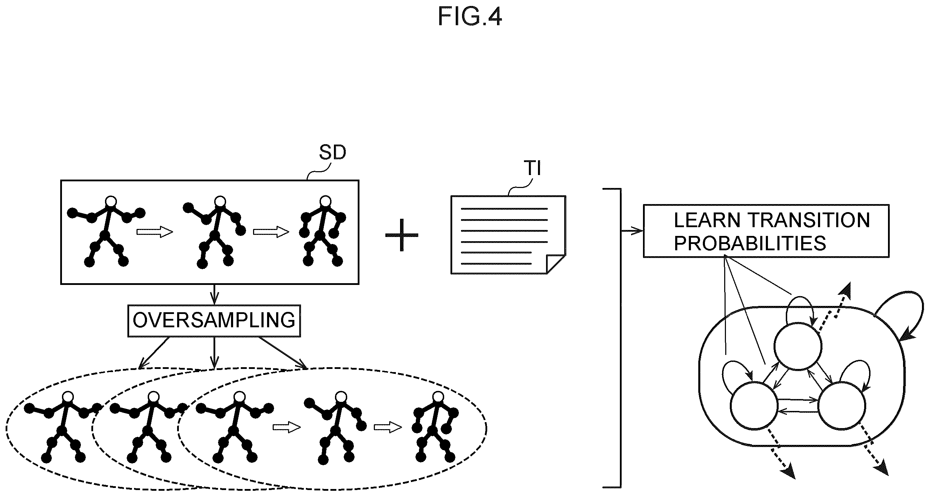

More specifically, as illustrated in Fig. 4, data of existing supervised data, which is an example of first supervised data, is used as seed data SD, and the data is augmented by oversampling therefrom. In the present exemplary embodiment, for example, oversampling is performed in the time direction, and then oversampling is performed in feature space.

Explanation follows regarding oversampling in the time direction. The oversampling in the time direction considers, for example, temporal extension and contraction related to a length of time taken for different movements depending on the person. And more specifically is as follows.

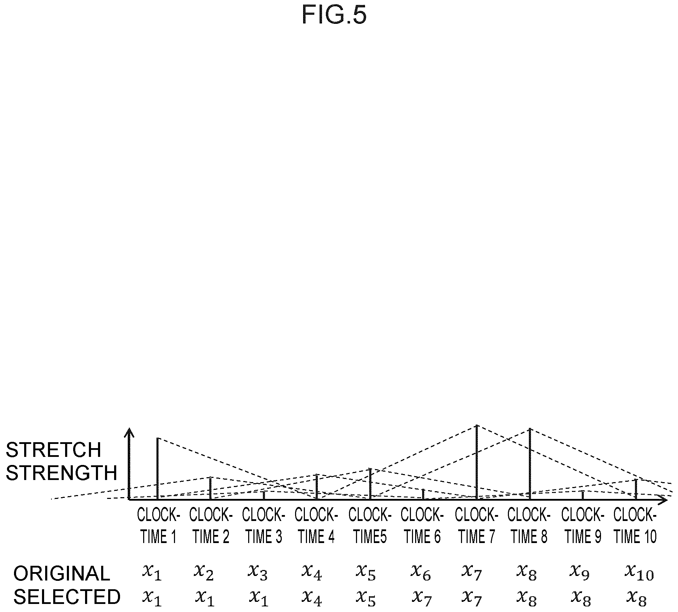

(1) As illustrated in Fig. 5, for each clock-time of an observation series of movements of a person, a random number is generated to represent a stretch strength of a feature at this clock-time. The vertical lines at respective clock-times in Fig. 5 represent stretch strengths generated by random numbers for corresponding original parameters.

(2) Each clock-time is propagated to before and after clock-times while attenuating the stretch strength of the clock-time. The stretch strength is attenuated so as become zero at a prescribed number of clock-times distant. In the example of Fig. 5, as represented by the broken lines, attenuation is performed so as to become zero at a clock-time three clock-times distant. The attenuation is not necessarily straight-line attenuation.

(3) A feature value at a clock-time corresponding to maximum strength from out of the original stretch strength of each clock-time and the propagated stretch strengths corresponding to the parameters propagated from before and after clock-times is selected as the feature value of this clock-time. In the example of Fig. 5, at clock-time 1 the original stretch strength is maximum, and so the feature value of clock-time 1, this being the original feature value, is selected. At clock-time 2 the stretch strength propagated from clock-time 1 is maximum, and so the feature value of clock-time 1 is selected. At clock-time 3 the stretch strength propagated from clock-time 1 is maximum, and so the feature value of clock-time 1 is selected. At clock-time 4 the original stretch strength is maximum, and so the feature value of clock-time 4, this being the original feature value, is selected.

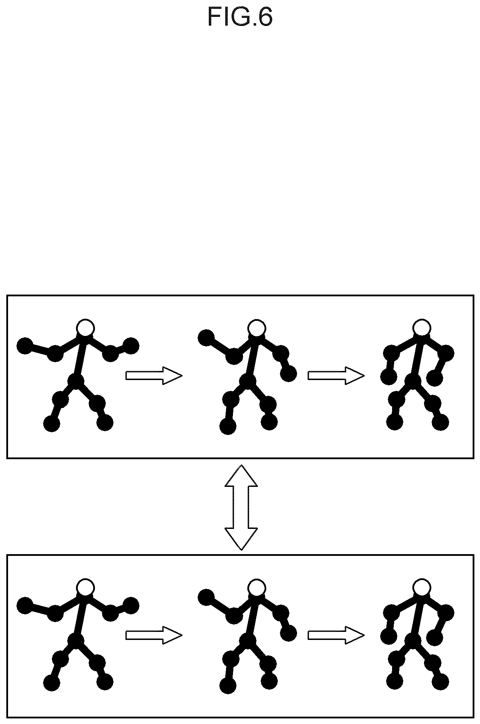

Explanation follows regarding oversampling in feature space. According to the above property 2, postures of the same task are similar to each other, and so by adding noise, data can be generated that has a variation similar to the variation of each actual observation, as illustrated in the example of Fig. 6.

The supervised data is augmented by applying teacher information TI of the seed data SD commonly across respective items of the augmented data. The augmented supervised data, which is an example of second supervised data, is employed to learn the transition probabilities of plural movements of the first HMMs using supervised learning.

In the oversampling, noise is generated and added to the feature value at each clock-time. For example, noise added may be generated from a multivariate Gaussian distribution having a covariance that is a fixed multiple of the covariance of the sample set of the identified movement. Moreover, a center distance d may be computed from the sample set of the identified movement to the sample set of the movement having a nearest center distance thereto, and the noise added may be generated from an isotropic Gaussian distribution (i.e. with a covariance matrix that is a diagonal matrix) such that a standard deviation in each axis direction of feature space is a fixed multiple of d.

In the present exemplary embodiment, noise related to the speed of each body location of a person performing a movement is added to the feature value of the movement by body location. For example, diagonal components that are variance components in a covariance matrix of Gaussian distribution change by body location of a person performing a movement. More specifically, a standard deviation $\sigma_i'$ (variance $\sigma_i'^2$) of a feature value that is a posture component of a feature vector at body location i (wherein i is a natural number) is computed according to Equation (1) using an angular speed $\omega_i$ of body location i, a value $\sigma_i$ (variance $\sigma_i^2$) of a standard deviation serving as a base, and a constant coefficient k.

$$\sigma_i' = \sigma_i + k\omega_i \qquad \text{Equation (1)}$$

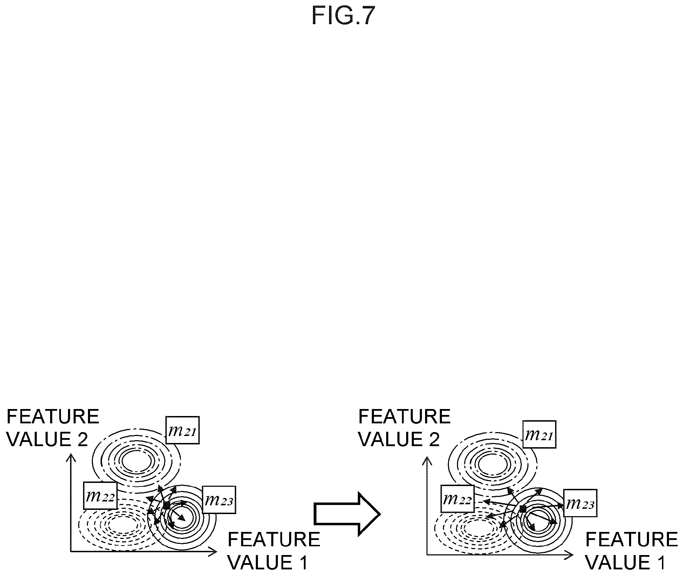

$\sigma_i$ and k are constants determined in advance experimentally, and do not vary with body location. As illustrated by the second term of Equation (1), noise, namely variation in posture, is increased in proportion to a magnitude of angular speed. For example, a horizontal axis of Fig. 7 expresses a feature value 1 that is a posture component of body location 1, and the vertical axis therein expresses a feature value 2 that is a posture component of body location 2.

Although feature space is expressed in two dimensions in Fig. 7, the number of dimensions may be greater than two. In Fig. 7, ellipses represent contour lines of probability distribution (Gaussian distribution) observed by a sample expressed as points in feature space of movements m21, m22, m23. The probability is higher the nearer to a center of the ellipses.

In cases in which an angular speed component of a motion of a body location 1 and an angular speed component of a motion of a body location 2 are substantially the same as each other, as illustrated on the left of Fig. 7, noise of substantially the same magnitude is added in both the vertical axis direction and the horizontal axis direction. However, in cases in which the angular speed component of a motion of the body location 1 is greater than the angular speed component of a motion of the body location 2, the noise added is greater in the horizontal axis direction than in the vertical axis direction, as illustrated at the right of Fig. 7.

Oversampling in the time direction enables changes in the time direction to be accommodated. Namely, even in case in which the same task is performed, a given movement (motion feature) will be observed for a shorter time, or observed for a longer time, due to a fast motion or a slow motion. For a fast motion sometimes a given movement is not observed.

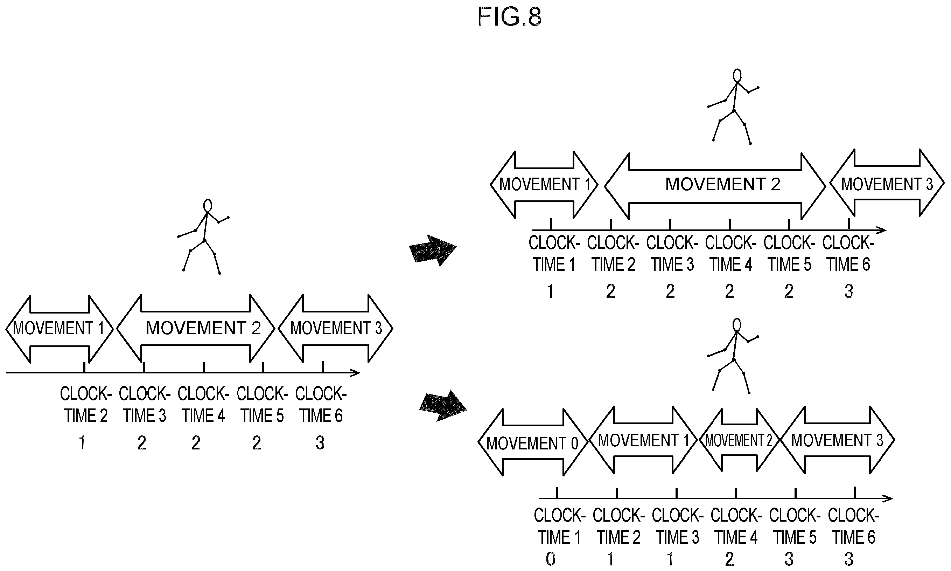

For example, a worker A takes about three clock-times for the action 2 as in the example illustrated on the left of Fig. 8, and a worker B takes about four clock-times for the action 2 as in the example illustrated on the right of Fig. 8, and a worker C takes about one clock-time for the action 2 as in the example illustrated at the bottom right of Fig. 8. Performing oversampling in the time direction enables augmentation of a given sample that has been temporally elongated or contracted.

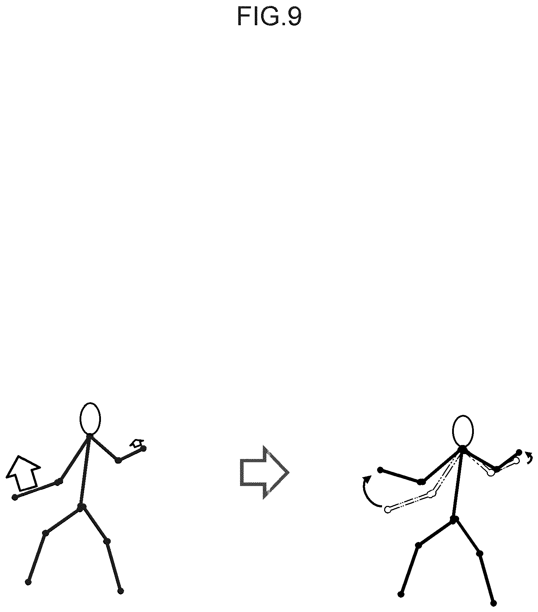

Oversampling in feature space enables variation in feature values expressing posture to be accommodated. For example as illustrated in the example on the left of Fig. 9, in cases in which a movement speed of a first arm is high and a movement speed of a second arm is low, then as illustrated in the example on the right of Fig. 9, a speed of change in posture of the first arm is also proportional and high, and accordingly variance in feature values is also large.

However, a change in posture of the second arm is proportional to speed and small, and accordingly variance in feature values is also small. Performing oversampling in feature space enables, in this manner, samples having different variances in feature value due to body location to be augmented.

Both oversampling in the time direction and oversampling in the feature direction may be performed, or one thereof may be performed alone. In cases in which oversampling is only performed in the feature direction, the noise added to the feature values at each clock-time by body location of each clock-time is noise related to the speed of each body location of the person performing movement.

The building section 13 uses the observation probabilities learnt in the observation probability learning section 11 and the state transition probabilities learnt in the transition probability learning section 12 to build an HSMM such as in the example illustrated in Fig. 1. O1, O2, ..., O8 represent the observation probabilities learnt in the observation probability learning section 11, and the arrows between the movements m1, m2, and m3 contained in each of the actions a1, a2, a3 correspond to the state transition probabilities learnt in the transition probability learning section 12. d1, d2, d3 represent successive durations of the respective actions, and the probability distributions of the successive durations are determined from the successive durations of the actions of the teacher information. For example, the probability distributions of the successive durations may be uniform distributions having a fixed range. Sensor data generated by detecting postures of a person using sensors are applied to the built HSMM, and action segments, which are time segments for each action, are estimated. More specific details regarding estimation are described later.

The action segment estimation model building device 10 of the present exemplary embodiment includes the following characteristics.

> 1. Observation probabilities of common movements for all actions of the first HMMs are learned by unsupervised learning.
> 2. Transition probabilities between movements of the first HMMs are learned by supervised learning using the supervised data resulting from augmenting the supervised seed data.

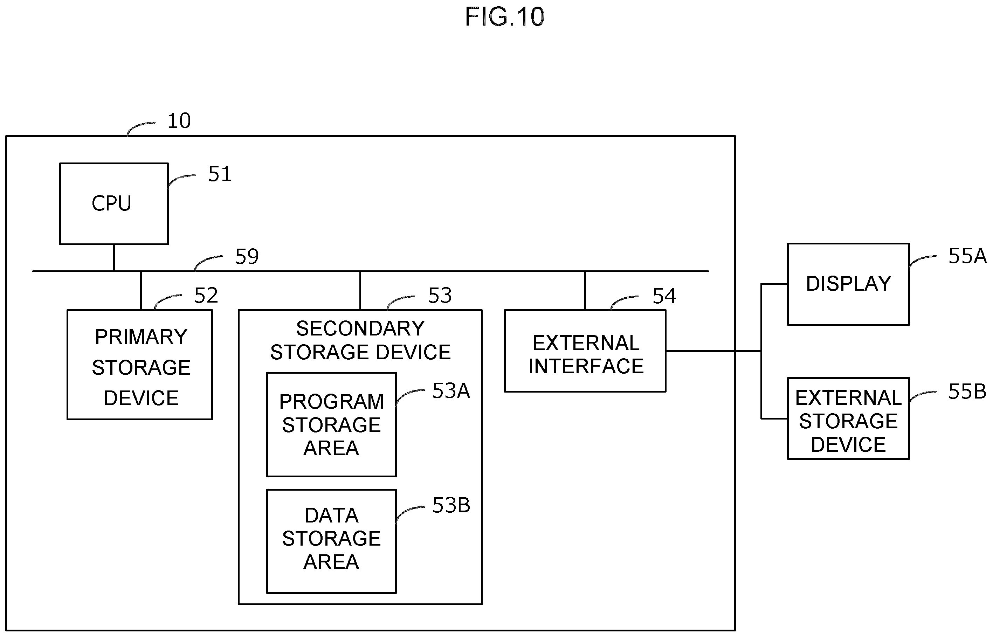

The action segment estimation model building device 10 includes, for example, a central processing unit (CPU) 51, a primary storage device 52, a secondary storage device 53, and an external interface 54, as illustrated in Fig. 10. The CPU 51 is an example of a processor, which is hardware. The CPU 51, the primary storage device 52, the secondary storage device 53, and the external interface 54 are connected together through a bus 59. The CPU 51 may be configured by a single processor, or may be configured by plural processors. A graphics processing unit (GPU) may also be employed, for example, instead of the CPU 51.

The primary storage device 52 is, for example, volatile memory such as random access memory (RAM) or the like. The secondary storage device 53 is, for example, non-volatile memory such as a hard disk drive (HDD) or a solid state drive (SSD).

The secondary storage device 53 includes a program storage area 53A and a data storage area 53B. The program storage area 53A is, for example, stored with a program such an action segment estimation model building program. The data storage area 53B is, for example, stored with supervised data, unsupervised data, learnt observation probabilities, transition probabilities, and the like.

The CPU 51 reads the action segment estimation model building program from the program storage area 53A and expands the action segment estimation model building program in the primary storage device 52. The CPU 51 acts as the observation probability learning section 11, the transition probability learning section 12, and the building section 13 illustrated in Fig. 2 by loading and executing the action segment estimation model building program.

Note that the program such as the action segment estimation model building program may be stored on an external server, and expanded in the primary storage device 52 over a network. Moreover, the program such as the action segment estimation model building program may be stored on a non-transitory recording medium such as a digital versatile disc (DVD), and expanded in the primary storage device 52 through a recording medium reading device.

An external device is connected to the external interface 54, and the external interface 54 performs a role in exchanging various information between the external device and the CPU 51. Fig. 10 illustrates an example in which a display 55A and an external storage device 55B are connected to the external interface 54. The external storage device 55B is, for example, stored with supervised data, unsupervised data, the built HSMM, and the like. The display 55A displays, for example, so as to enable viewing of the built HSMM model.

The action segment estimation model building device 10 may, for example, be a personal computer, a server, a computer in the cloud, or the like.

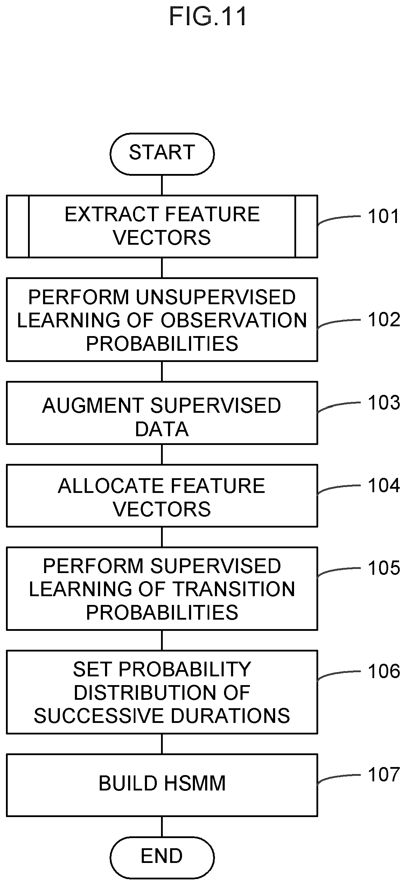

Fig. 11 illustrates an example of a flow of action segment estimation model building processing. At step 101, the CPU 51 extracts feature vectors expressing a motion that is a series of postures of a person from learning data, as described below. At step 102, the CPU 51 performs clustering (GMM parameter estimation) on the feature vectors extracted at step 101 so as to classify into elemental movements, and learns the observation probabilities of each movement using unsupervised learning.

At step 103, the CPU 51 augments supervised data by appending teacher information of supervised seed data to data generated by oversampling the supervised seed data, as described later. At step 104, the CPU 51 allocates the feature vectors for the supervised data to respective time segments of the actions appended with the teacher information.

At step 105, the CPU 51 takes a time series of the feature vectors in the time segments allocated at step 104 as observation data, and uses the supervised data augmented at step 103 to learn the transition probabilities of the movements of the first HMMs using supervised learning.

At step 106, the CPU 51 sets, as a probability distribution of successive durations of respective actions, a uniform distribution having a prescribed range for the successive durations of the respective actions appended with the teacher information. The CPU 51 uses the observation probabilities learnt at step 102 and the transition probabilities learnt at step 105 to build an HSMM. The HSMM is built such that actions of the second HMMs transition in the order of the respective actions appended with the teacher information after a fixed period of time set at step 106 has elapsed. The built HSMM may, for example, be stored in the data storage area 53B.

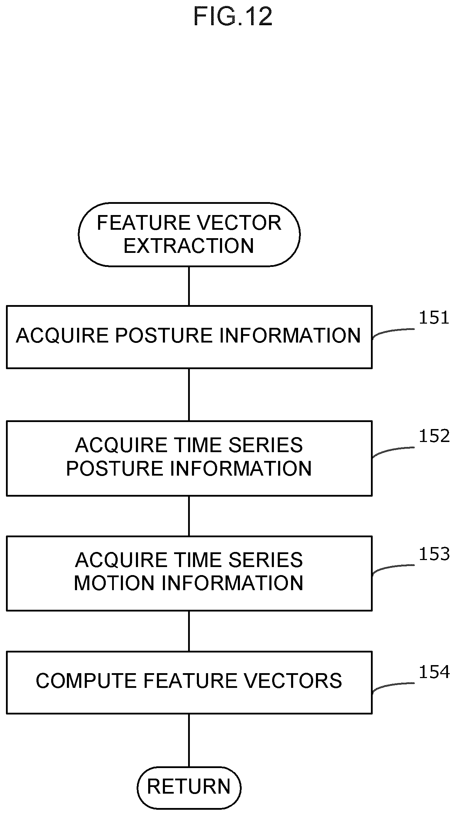

Fig. 12 illustrates an example of detail of the feature vector extraction processing of step 101 of Fig. 11. At step 151, the CPU 51 acquires posture information of a person by detecting and tracking a person in data employed for training. In cases in which the posture information acquired at step 151 contains posture information for plural people, at step 152 the CPU 51 acquires, from the time series data of posture information, time series data of posture information that is the target for analysis. The analysis target posture information is selected from a size of a bounding box around the person, time, or the like.

At step 153, the CPU 51 acquires time series data of motion information for each location on a body from the time series data of the posture information acquired at step 152. The time series data of the motion information may, for example, be curvature, curvature speed, and the like for each location. The locations may, for example, be an elbow, a knee, or the like.

At step 154, the CPU 51 uses a sliding time window to compute feature vectors by averaging the motion information of step 153 in the time direction within a window for each fixed time interval.

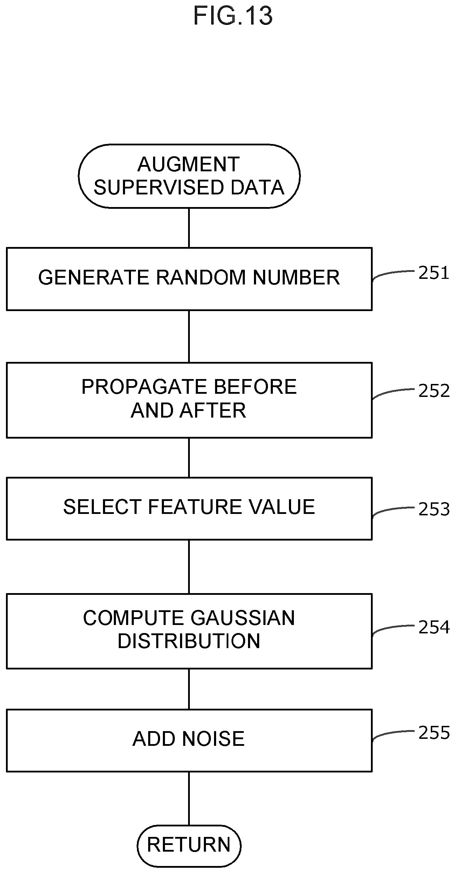

Fig. 13 illustrates an example of a flow of the supervised data augmentation processing of step 103 of Fig. 11. At step 251, the CPU 51 generates at each of the clock-times of the observation data (an observation time series of person movements) a random number expressing stretch strength of the feature of the clock-times. At step 252, the CPU 51 propagates a value of the stretch strength generated for each clock-time to times before and after this clock-time while attenuating the value.

At step 253, the CPU 51 takes a feature value of observation data at a clock-time corresponding to the maximum stretch strength from out of the values of stretch strength of this clock-time and the stretch strengths propagated from other clock-times, and selects this as the feature value for this clock-time. At step 254, the CPU 51 computes a Gaussian distribution covariance matrix based on the values of angular speed at each of the body locations.

At step 255, the CPU 51 adds noise generated with the Gaussian distribution of the covariance matrix computed at step 254 to each of the feature values selected at step 253. The supervised data is augmented by repeatedly augmenting the supervised data.

The processing of step 254 and step 255 may be repeated alone. In such cases, the noise is added to the original feature values at each of the clock-times. Alternatively, the processing of steps 251 to step 253 may be repeated alone.

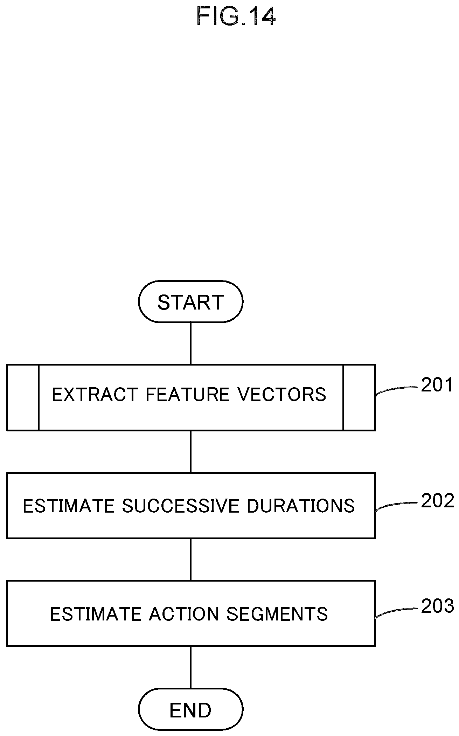

Fig. 14 illustrates an example of a flow of action segment estimation processing employing the HSMM built in the present exemplary embodiment. The action segment estimation model building device 10 of Fig. 10 may function as an action segment estimation device by storing the built HSMM in the data storage area 53B.

At step 201, the CPU 51 extracts feature vectors from sensor data generated by detecting postures of a person using sensors. The sensors are devices to detect person posture and may, for example, be a camera, infrared sensor, motion capture device, or the like. Step 201 of Fig. 14 is similar to step 101 of Fig. 11, and so detailed explanation thereof will be omitted.

At step 202, the CPU 51 takes a series of the feature vectors extracted at step 201 as observation data, and estimates successive durations of each action state by comparing to the HSMM built with the action segment estimation model building processing. At step 203, the CPU 51 estimates time segments of each action from the successive durations of each action state estimated at step 202.

In technology employing a video as input so as to recognize a particular action in the video, basic movement recognition, element action recognition, and higher level action recognition are performed. A particular action in a video is a more complicated higher level action from combining element actions, basic movement recognition is posture recognition for each frame, and element action recognition is performed by temporal spatial recognition, and recognizes a simple action over a given length of time. Higher level action recognition is recognition of a complex action over a given length of time. Such technology utilizes action segment estimation model building processing and a built action segment estimation model to enable estimation of action segments.

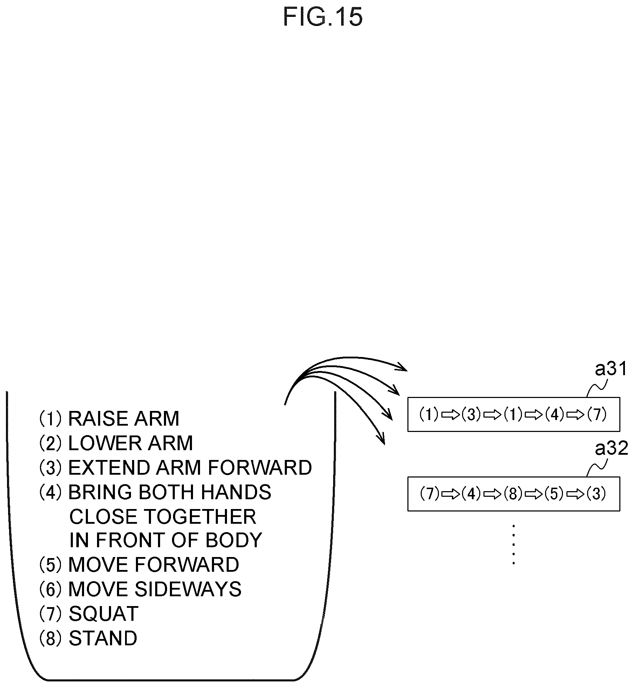

An HSMM in which movements included in actions are not particularly limited may be employed in related technology. In such related technology, for example as illustrated in the example in Fig. 15, suppose that the following movements are present.

(1) raise arm, (2) lower arm, (3) extend arm forward, (4) bring both hands close together in front of body, (5) move forward, (6) move sideways, (7) squat, (8) stand.

Examples of actions are, for example, as set out below:

Action a31: (1) raise arm → (3) extend arm forward → (1) raise arm → (4) bring both hands close together in front of body → (7) squat;

Action a32: (7) squat → (4) bring both hands close together in front of body → (8) stand → (5) move forward → (3) extend arm forward; and the like.

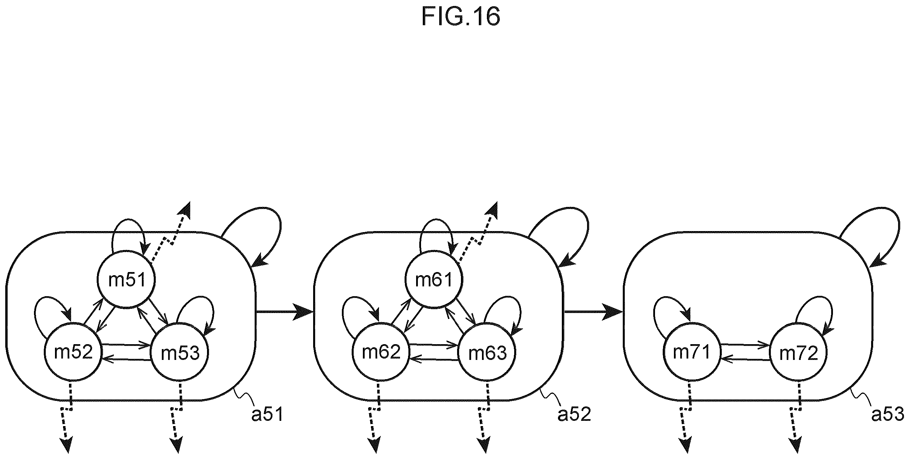

As described above, in cases in which an HMM includes movements of general actions, namely plural movements not limited for the action to be estimated, the observation probabilities of the movements are difficult to express as a single simple probability distribution. In order to address this issue there is technology that employs a hierarchical hidden Markov model. As illustrated in the example in Fig. 16, a hierarchical hidden Markov model includes a higher level HMM containing plural lower level HMMs as states. Actions a51, a52, and a53 are examples of lower level HMMs. Each of the lower level HMMs includes movements as states, and examples of movements are m51, m52, m53, m61, m62, m62, m63, m71, and m72.

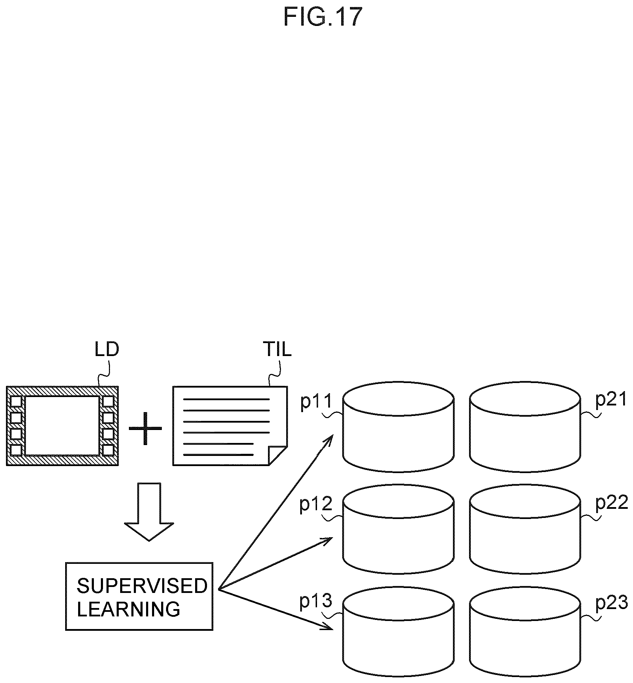

As illustrated in the example in Fig. 17, a hierarchical HMM uses learning data LD appended with teacher information TIL, and learns observation probabilities and transition probabilities of movements for each action by supervised learning. Fig. 17 illustrates an example of the observation probability p11 and the transition probability p21 of an action a51, the observation probability p12 and the transition probability p22 of an action a52, and the observation probability p13 and the transition probability p23 of an action a53. However, in a hierarchical HMM there is a great number of parameters and the degrees of freedom for the parameters are high, and so a great volume of supervised data is employed to learn the parameters. This means that time and effort is needed to create teacher information for the supervised data.

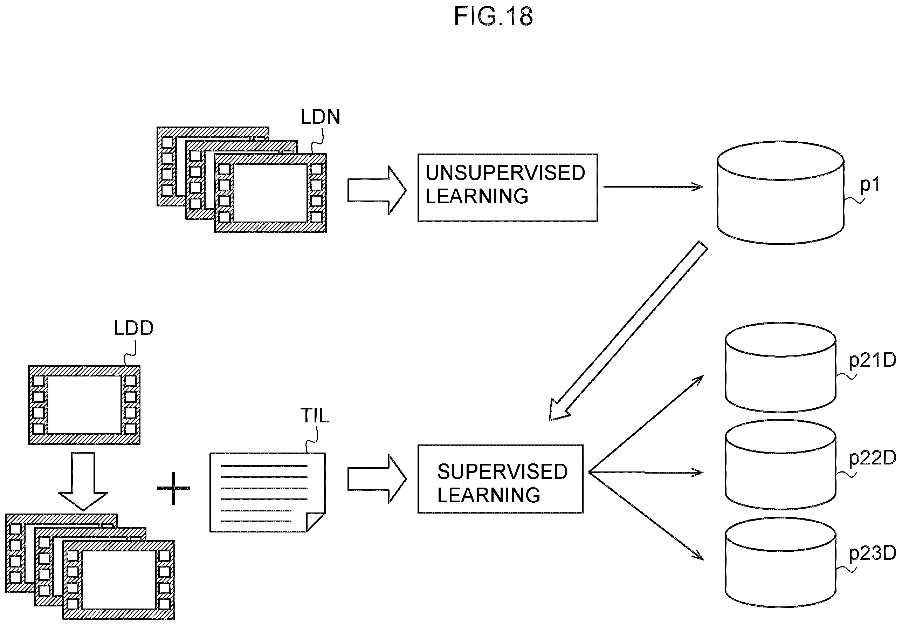

However as illustrated in Fig. 18, in the present disclosure the common observation probabilities p1 of the respective first HMMs corresponding to actions of the HSMM are learned by unsupervised learning using the unsupervised data LDN. The learned observation probabilities p1 are fixed, and the transition probabilities p21D, p22D, p23D of the respective movements of the first HMMs are learned by supervised learning employing the supervised data. In the present disclosure, the supervised data is augmented, by adding the teacher information TIL of the supervised data LDD to data generated by oversampling the existing supervised data LDD, and this augmented supervised data is employed in supervised learning. Thus an action segment estimation model can be built efficiently even in cases in which there is only a small volume of existing supervised data.

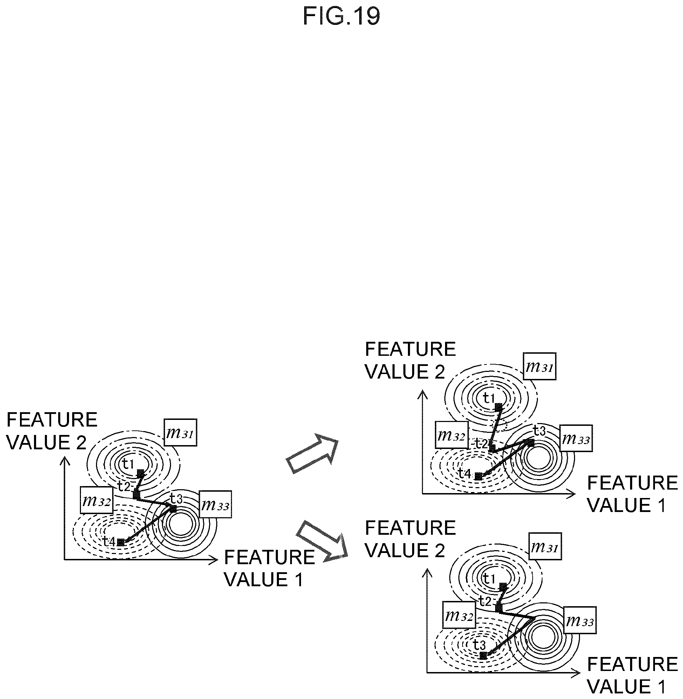

As illustrated in the example on the left of Fig. 19, for example, an example is illustrated of fluctuations of observation data for case in which a movement m31 at clock-time t1, a movement m31 at clock-time t2, a movement m33 at clock-time t3, and a movement m32 at clock-time t4 form an array of high probability movements. As illustrated in the example at the top right of Fig. 19, in cases in which a motion of movement is changed such that an observation at clock-time t2 changes so as to be nearer to the movement m32, then the movement m31 at clock-time t1, the movement m32 at clock-time t2, the movement m33 at clock-time t3, and the movement m32 at clock-time t4 form an array of high probability movements.

As illustrated in the example at the bottom right of Fig. 19, when the speed of a movement is raised, a sample of clock-time t3 on the left of Fig. 19 is not observed, and the movement m31 at clock-time t1, the movement m31 at clock-time t2, and the movement m32 at clock-time t3 form an array of high probability movements. To address such fluctuations, which sort of fluctuations may arise can be reflected in the model as transition probabilities by pre-training.

However, in cases in which there is only a small volume of supervised data, many fluctuations are unable to be learnt directly, and accommodation of fluctuations in the observation data is weak. However, in the present exemplary embodiment, performing oversampling in the time direction and oversampling in feature space enables appropriate supervised data to be augmented so as to enable accommodation of fluctuations in the observation data.

The present exemplary embodiment thereby enables modeling of the way movements are arrayed under presumed fluctuations in the observation data even in cases in which there is a small volume of existing supervised data. This thereby enables time segments to be estimated at high precision even in cases in which there is function in the observation data.

In the present exemplary embodiment, in a hidden semi-Markov model, observation probabilities for each type of movement of plural first hidden Markov models are learned using unsupervised learning. The hidden semi-Markov model includes plural second hidden Markov models each containing plural of the first hidden Markov models using types of movement of a person as states and with the plural second hidden Markov models each using actions determined by combining plural of the movements as states. The learnt observation probabilities are fixed, input first supervised data is augmented so as to give second supervised data, and transition probabilities of the movements of the first hidden Markov models are learned by supervised learning in which the second supervised data is employed. The learnt observation probabilities and the learnt transition probabilities are used to build the hidden semi-Markov model that is a model for estimating segments of the actions. Augmentation is performed on the first supervised data by adding teacher information of the first supervised data to each item of data generated by at least one out of oversampling in the time direction or oversampling in feature space.

The present disclosure enables an action segment estimation model to be built efficiently. Namely for example enables, for plural actions of movements performed in a decided order, such as in standard tasks in a factory, in dance choreography, and in martial art forms, the time segments of each action to be estimated accurately under the condition that there is a restriction on the order of occurrence.

**Claims**

1. An action segment estimation model building device (10), applying for action recognition from a video, the device comprising:

   an observation probability learning unit (11) that, in a hidden semi-Markov model (HSMM), including a plurality of second hidden Markov models (HMM) each containing a plurality of first hidden Markov models (HMM) using types of movement of a person as states, and the plurality of second hidden Markov models (HMM) each using actions defined by combining a plurality of the movements as states, learns observation probabilities for each of the movement types of the plurality of first hidden Markov models (HMM) using unsupervised learning;
   a transition probability learning unit (12) that fixes the observation probabilities for each type of the movements of the plurality of first hidden Markov models (HMM) learnt by unsupervised learning using the observation probability learning unit, that takes as input existing first supervised data that has teacher information that is information giving a correct answer of a time segment in which each action occurs for posture time series data, that generates second supervised data by augmenting the input first supervised data, and that learns transition probabilities of the movements of the first hidden Markov models (HMM) by supervised learning in which the second supervised data is used with the observation probability learned by the unsupervised learning fixed; and
   a building unit (13) that builds the hidden semi-Markov model (HSMM) that is a model for estimating segments of the actions by using the observation probabilities learnt by the observation probability learning unit (11) and the transition probabilities learnt by the transition probability learning unit (12),
   wherein the transition probability learning unit (12) augments the first supervised data by adding teacher information of the first supervised data to each item of data generated by at least one of oversampling in a time direction or oversampling in a feature space.

2. The action segment estimation model building device (10) of claim 1, wherein in a case in which the oversampling in the time direction is performed on the first supervised data:

   the oversampling in the time direction is performed by propagating an original parameter randomly set, at each clock-time, to before and after clock-times while attenuating the original parameter; and
   at each clock-time, a feature value of a movement corresponding to a clock-time of a maximum parameter among the original parameter and parameters propagated from the before and after clock-times is selected as a feature value for each of the clock-times.

3. The action segment estimation model building device (10) of claim 2, wherein the original parameter is attenuated so as to become zero at a predetermined number of clock-times distant.

4. The action segment estimation model building device (10) of any one of claim 1 to claim 3, wherein, in a case in which the oversampling in the feature space is performed on the first supervised data, the oversampling in the feature space is performed by adding noise related to a speed of each body location of a person performing a movement in the first supervised data to a feature value of the movement for each body location.

5. The action segment estimation model building device (10) of claim 4, wherein a magnitude of noise related to the speed of each of the body locations is greater as each angular speed for each of the body locations is greater.

6. An action segment estimation model building method that is a computer implemented method, applying for action recognition from a video, the method comprising:

   in a hidden semi-Markov model (HSMM) including a plurality of second hidden Markov models (HMM) each containing a plurality of first hidden Markov models (HMM) using types of movement of a person as states, and the plurality of second hidden Markov models (HMM) each using actions defined by combining a plurality of the movements as states, learning observation probabilities for each of the movement types of the plurality of first hidden Markov models (HMM) using unsupervised learning;

fixing the learnt observation probabilities for each type of the movements of the plurality of first hidden Markov models (HMM) learnt by unsupervised learning, inputting existing first supervised data that has teacher information that is information giving a correct answer of a time segment in which each action occurs for posture time series data, generating second supervised data by augmenting the input first supervised data, and learning transition probabilities of the movements of the first hidden Markov models (HMM) by supervised learning in which the second supervised data is used with the observation probability learned by the unsupervised learning fixed; and

building the hidden semi-Markov model (HSMM) that is a model for estimating segments of the actions by using the learnt observation probabilities and the learnt transition probabilities,

wherein the action segment estimation model building method augments the first supervised data by adding teacher information of the first supervised data to each item of data generated by at least one of oversampling in a time direction or oversampling in a feature space.

7. The action segment estimation model building method of claim 6, wherein in a case in which the oversampling in the time direction is performed on the first supervised data:

the oversampling in the time direction is performed by propagating an original parameter randomly set, at each clock-time, to before and after clock-times while attenuating the original parameter; and

at each clock-time, a feature value of a movement corresponding to a clock-time of a maximum parameter among the original parameter and parameters propagated from the before and after clock-times is selected as a feature value for each of the clock-times.

8. The action segment estimation model building method of claim 7, wherein the original parameter is attenuated so as to become zero at a predetermined number of clock-times distant.

9. The action segment estimation model building method of any one of claim 6 to claim 8, wherein, in a case in which the oversampling in the feature space is performed on the first supervised data, the oversampling in the feature space is performed by adding noise related to a speed of each body location of a person performing a movement in the first supervised data to a feature value of the movement for each body location.

10. The action segment estimation model building method of claim 9, wherein a magnitude of noise related to the speed of each of the body locations is greater as each angular speed for each of the body locations is greater.

11. An action segment estimation model building program, applying for action recognition from a video, which, when executed by a computer, causes the computer to perform processing comprising:

in a hidden semi-Markov model (HSMM) including a plurality of second hidden Markov models (HMM) each containing a plurality of first hidden Markov models (HMM) using types of movement of a person as states, and the plurality of second hidden Markov models (HMM) each using actions defined by combining a plurality of the movements as states, learning observation probabilities for each of the movement types of the plurality of first hidden Markov models (HMM) using unsupervised learning;

fixing the learnt observation probabilities for each type of the movements of the plurality of first hidden Markov models (HMM) learnt by unsupervised learning, inputting existing first supervised data that has teacher information that is information giving a correct answer of a time segment in which each action occurs for posture time series data, generating second supervised data by augmenting the input first supervised data, and learning transition probabilities of the movements of the first hidden Markov models (HMM) by supervised learning in which the second supervised data is used with the observation probability learned by the unsupervised learning fixed; and

building the hidden semi-Markov model (HSMM) that is a model for estimating segments of the actions by using the learnt observation probabilities and the learnt transition probabilities,

wherein, in the processing, augmentation is performed on the first supervised data by adding teacher information of the first supervised data to each item of data generated by at least one of oversampling in a time direction or oversampling in a feature space.

12. The action segment estimation model building program of claim 11, wherein in a case in which the oversampling in the time direction is performed on the first supervised data:

the oversampling in the time direction is performed by propagating an original parameter randomly set, at each clock-time, to before and after clock-times while attenuating the original parameter; and
at each clock-time, a feature value of a movement corresponding to a clock-time of a maximum parameter among the original parameter and parameters propagated from the before and after clock-times is selected as a feature value for each of the clock-times.

13. The action segment estimation model building program of claim 12, wherein the original parameter is attenuated so as to become zero at a predetermined number of clock-times distant.

14. The action segment estimation model building program of any one of claim 11 to claim 13, wherein, in a case in which the oversampling in the feature space is performed on the first supervised data, the oversampling in the feature space is performed by adding noise related to a speed of each body location of a person performing a movement in the first supervised data to a feature value of the movement for each body location.

15. The action segment estimation model building program of claim 14, wherein a magnitude of noise related to the speed of each of the body locations is greater as each angular speed for each of the body locations is greater.


**Patentansprüche**

1. Vorrichtung (10) zum Aufbau eines Modells zur Schätzung eines Aktionssegments, die zur Aktionserkennung aus einem Video angewendet wird, wobei die Vorrichtung Folgendes umfasst:

    eine Beobachtungswahrscheinlichkeits-Lerneinheit (11), die in einem Hidden-Semi-Markov-Modell (HSMM) eine Vielzahl von zweiten Hidden-Markov-Modellen (HMM) einschließt, von denen jedes eine Vielzahl von ersten Hidden-Markov-Modellen (HMM) enthält, die Bewegungsarten einer Person als Zustände verwenden, und wobei die Vielzahl von zweiten Hidden-Markov-Modellen (HMM), die jeweils Aktionen verwenden, die durch Kombinieren einer Vielzahl der Bewegungen als Zustände definiert sind, Beobachtungswahrscheinlichkeiten für jede der Bewegungsarten der Vielzahl von ersten Hidden-Markov-Modellen (HMM) unter Verwendung von unüberwachtem Lernen lernt;
    eine Übergangswahrscheinlichkeits-Lerneinheit (12), die die Beobachtungswahrscheinlichkeiten für jede Art der Bewegungen der Mehrzahl von ersten Hidden-Markov-Modellen (HMM) festlegt, die durch unüberwachtes Lernen unter Verwendung der Beobachtungswahrscheinlichkeits-Lerneinheit gelernt wurden, die als Eingabe vorhandene erste überwachte Daten nimmt, die Lehrer-Informationen aufweisen, bei denen es sich um Informationen handelt, die eine richtige Antwort für ein Zeitsegment liefern, in dem jede Aktion für Zeitreihendaten zur Körperhaltung auftritt, die zweite überwachte Daten durch Ergänzen der eingegebenen ersten überwachten Daten erzeugt, und die Übergangswahrscheinlichkeiten der Bewegungen der ersten Hidden-Markov-Modelle (HMM) durch überwachtes Lernen lernt, bei dem die zweiten überwachten Daten verwendet werden, wobei die durch das unüberwachte Lernen gelernte Beobachtungswahrscheinlichkeit festgelegt ist; und
    eine Aufbaueinheit (13), die das Hidden-Semi-Markov-Modell (HSMM) aufbaut, das ein Modell zur Schätzung von Aktionssegmenten unter Verwendung der von der Beobachtungswahrscheinlichkeits-Lerneinheit (11) gelernten Beobachtungswahrscheinlichkeiten und der von der Übergangswahrscheinlichkeits-Lerneinheit (12) gelernten Übergangswahrscheinlichkeiten ist,
    wobei die Übergangswahrscheinlichkeits-Lerneinheit (12) die ersten überwachten Daten ergänzt, indem sie jedem Datenelement, das durch mindestens eines von Überabtastung in Zeitrichtung oder Überabtastung in einem Merkmalsraum erzeugt wurde, Lehrer-Informationen der ersten überwachten Daten hinzufügt.

2. Vorrichtung (10) zum Aufbau eines Modells zur Schätzung eines Aktionssegments nach Anspruch 1, wobei in einem Fall, in dem die Überabtastung in Zeitrichtung an den ersten überwachten Daten durchgeführt wird:

    die Überabtastung in Zeitrichtung durchgeführt wird, indem ein ursprünglich zufällig festgelegter Parameter zu jedem Taktzeitpunkt auf vor und nach Taktzeitpunkten übertragen wird, während der ursprüngliche Parameter gedämpft wird; und
    zu jedem Taktzeitpunkt ein Merkmalswert einer Bewegung, der einem Taktzeitpunkt eines maximalen Parameters unter dem ursprünglichen Parameter und den Parametern, die von den vorherigen und nachfolgenden Taktzeitpunkten propagiert wurden, entspricht, als Merkmalswert für jeden der Taktzeitpunkte ausgewählt wird.

3. Vorrichtung (10) zum Aufbau eines Modells zur Schätzung eines Aktionssegments nach Anspruch 2, wobei der ursprüngliche Parameter so gedämpft wird, dass er nach Abstand einer vorbestimmten Anzahl von Taktzeiten den Wert Null annimmt.

4. Vorrichtung (10) zum Aufbau eines Modells zur Schätzung eines Aktionssegments nach einem beliebigen der Ansprüche 1 bis 3, wobei in einem Fall, in dem die Überabtastung im Merkmalsraum an den ersten überwachten Daten durchgeführt wird, die Überabtastung im Merkmalsraum durchgeführt wird, indem Rauschen, das sich auf eine Geschwindigkeit jeder Körperposition einer Person bezieht, die eine Bewegung in den ersten überwachten Daten ausführt, zu einem Merkmalswert der Bewegung für jede Körperposition hinzugefügt wird.

5. Vorrichtung (10) zum Aufbau eines Modells zur Schätzung eines Aktionssegments nach Anspruch 4, wobei ein Ausmaß des Rauschens in Bezug auf die Geschwindigkeit jeder der Körperpositionen umso größer ist, je größer die Winkelgeschwindigkeit für jede der Körperpositionen ist.

6. Verfahren zum Aufbau eines Modells zur Schätzung eines Aktionssegments, das ein computerimplementiertes Verfahren ist, das zur Aktionserkennung aus einem Video angewendet wird, wobei das Verfahren Folgendes umfasst:

   in einem Hidden-Semi-Markov-Modell (HSMM), Einschließen einer Vielzahl von zweiten Hidden-Markov-Modellen (HMM), die jeweils eine Vielzahl von ersten Hidden-Markov-Modellen (HMM) enthalten, unter Verwendung von Bewegungstypen einer Person als Zustände, und wobei die Vielzahl von zweiten Hidden-Markov-Modellen (HMM) jeweils Aktionen verwenden, die durch Kombinieren einer Vielzahl der Bewegungen als Zustände definiert sind, und Beobachtungswahrscheinlichkeiten für jeden der Bewegungstypen der Vielzahl von ersten Hidden-Markov-Modellen (HMM) unter Verwendung von unüberwachtem Lernen lernen;
   Festlegen der gelernten Beobachtungswahrscheinlichkeiten für jeden Typ der Bewegungen der Vielzahl erster Hidden-Markov-Modelle (HMM), die durch unüberwachtes Lernen gelernt wurden, Eingeben vorhandener erster überwachter Daten, die Lehrinformation aufweisen, die Informationen sind, die eine richtige Antwort eines Zeitsegments angeben, in dem jede Aktion für Zeitreihendaten der Körperhaltung auftritt, Erzeugen zweiter überwachter Daten durch Augmentieren der eingegebenen ersten überwachten Daten, und Lernen von Übergangswahrscheinlichkeiten der Bewegungen der ersten Hidden-Markov-Modelle (HMM) durch überwachtes Lernen, bei dem die zweiten überwachten Daten verwendet werden, wobei die durch das unüberwachte Lernen gelernte Beobachtungswahrscheinlichkeit festgelegt ist; und
   Aufbauen des Hidden-Semi-Markov-Modells (HSMM), das ein Modell zum Schätzen von Segmenten der Aktion ist, durch Verwendung der gelernten Beobachtungswahrscheinlichkeiten und der gelernten Übergangswahrscheinlichkeiten,
   wobei das Verfahren zum Aufbau eines Modells zur Schätzung des Aktionssegments die ersten überwachten Daten augmentiert, indem Lehrinformation der ersten überwachten Daten zu jedem Datenelement hinzugefügt wird, das durch mindestens eines von Überabtastung in Zeitrichtung oder Überabtastung im Merkmalsraum erzeugt wurde.

7. Verfahren zum Aufbau eines Modells zur Schätzung eines Aktionssegments nach Anspruch 6, wobei in einem Fall, in dem die Überabtastung in Zeitrichtung an den ersten überwachten Daten durchgeführt wird:

   die Überabtastung in Zeitrichtung dadurch durchgeführt wird, dass ein ursprünglich an jedem Zeittakt zufällig eingestellter Parameter auf vorhergehende und nachfolgende Zeittakte unter Abschwächung des ursprünglichen Parameters propagiert wird; und
   bei jedem Zeittakt ein Merkmalswert einer Bewegung, der einem Zeittakt eines Maximalparameters unter dem ursprünglichen Parameter und den von den vorhergehenden und nachfolgenden Zeittakten propagierten Parametern entspricht, als Merkmalswert für jeden der Zeittakte ausgewählt wird.

8. Verfahren zum Aufbau eines Modells zur Schätzung eines Aktionssegments nach Anspruch 7, wobei der ursprüngliche Parameter so gedämpft wird, dass er nach Abstand einer vorbestimmten Anzahl von Taktzeiten den Wert Null annimmt.

9. Verfahren zum Aufbau eines Modells zur Schätzung eines Aktionssegments nach einem beliebigen der Ansprüche 6 bis 8, wobei in einem Fall, in dem die Überabtastung im Merkmalsraum an den ersten überwachten Daten durchgeführt wird, die Überabtastung im Merkmalsraum durchgeführt wird, indem Rauschen, das sich auf eine Geschwindigkeit jeder Körperposition einer Person bezieht, die eine Bewegung in den ersten überwachten Daten ausführt, zu einem Merkmalswert der Bewegung für jede Körperposition hinzugefügt wird.

10. Verfahren zum Aufbau eines Modells zur Schätzung eines Aktionssegments nach Anspruch 9, wobei ein Ausmaß des Rauschens, das mit der Geschwindigkeit jeder der Körperpositionen zusammenhängt, größer ist, je größer jede Winkelgeschwindigkeit für jede der Körperpositionen ist.

**11.** Programm zum Aufbau eines Modells zur Schätzung des Aktionssegments, das zur Aktionserkennung aus einem Video angewendet, das, wenn es von einem Computer ausgeführt wird, den Computer dazu veranlasst, eine Verarbeitung durchzuführen, die Folgendes umfasst:

in einem Hidden-Semi-Markov-Modell (HSMM), Einschließen einer Vielzahl zweiter Hidden-Markov-Modelle (HMM), von denen jedes eine Vielzahl erster Hidden-Markov-Modelle (HMM) enthält, die Bewegungstypen einer Person als Zustände verwenden, und wobei die Vielzahl zweiter Hidden-Markov-Modelle (HMM) jeweils Aktionen als Zustände verwendet, die durch Kombinieren einer Vielzahl der Bewegungen definiert sind, wobei Beobachtungswahrscheinlichkeiten für jeden der Bewegungstypen der Vielzahl erster Hidden-Markov-Modelle (HMM) unter Verwendung von unüberwachtem Lernen gelernt werden;

Festlegen der gelernten Beobachtungswahrscheinlichkeiten für jeden Typ der Bewegungen der Vielzahl erster Hidden-Markov-Modelle (HMM), die durch unüberwachtes Lernen gelernt wurden, Eingeben von vorhandenen ersten überwachten Daten, die Lehrinformation aufweisen, die Informationen sind, die eine richtige Antwort eines Zeitsegments angeben, in dem jede Aktion für Zeitreihendaten der Körperhaltung auftritt, Erzeugen von zweiten überwachten Daten durch Augmentieren der eingegebenen ersten überwachten Daten und Lernen von Übergangswahrscheinlichkeiten der Bewegungen der ersten Hidden-Markov-Modelle (HMM) durch überwachtes Lernen, bei dem die zweiten überwachten Daten verwendet werden, wobei die durch das unüberwachte Lernen gelernte Beobachtungswahrscheinlichkeit festgelegt ist; und

Aufbauen des Hidden-Semi-Markov-Modells (HSMM), das ein Modell zum Schätzen von Segmenten der Aktion ist, durch Verwendung der gelernten Beobachtungswahrscheinlichkeiten und der gelernten Übergangswahrscheinlichkeiten,

wobei in der Verarbeitung eine Augmentierung an den ersten überwachten Daten durchgeführt wird, indem Lehrinformationen der ersten überwachten Daten zu jedem Datenelement hinzugefügt werden, das durch mindestens eines von Überabtastung in Zeitrichtung oder Überabtastung im Merkmalsraum erzeugt wurde.

**12.** Programm zum Aufbau eines Modells zur Schätzung eines Aktionssegments nach Anspruch 11, wobei in einem Fall, in dem die Überabtastung in Zeitrichtung an den ersten überwachten Daten durchgeführt wird:

die Überabtastung in Zeitrichtung dadurch durchgeführt wird, dass ein ursprünglich an jedem Zeittakt zufällig eingestellter Parameter auf vorhergehende und nachfolgende Zeittakte unter Abschwächung des ursprünglichen Parameters propagiert wird; und

bei jedem Zeittakt ein Merkmalswert einer Bewegung, der einem Zeittakt eines Maximalparameters unter dem ursprünglichen Parameter und den von den vorhergehenden und nachfolgenden Zeittakten propagierten Parametern entspricht, als Merkmalswert für jeden der Zeittakte ausgewählt wird.

**13.** Programm zum Aufbau eines Modells zur Schätzung eines Aktionssegments nach Anspruch 12, wobei der ursprüngliche Parameter so gedämpft wird, dass er nach Abstand einer vorbestimmten Anzahl von Taktzeiten den Wert Null annimmt.

**14.** Programm zum Aufbau eines Modells zur Schätzung eines Aktionssegments nach einem beliebigen der Ansprüche 11 bis 13, wobei, in einem Fall, in dem die Überabtastung im Merkmalsraum an den ersten überwachten Daten durchgeführt wird, die Überabtastung im Merkmalsraum durchgeführt wird, indem Rauschen, das mit einer Geschwindigkeit jeder Körperposition einer Person, die eine Bewegung in den ersten überwachten Daten ausführt, in Zusammenhang steht, zu einem Merkmalswert der Bewegung für jede Körperposition hinzugefügt wird.

**15.** Programm zum Aufbau eines Modells zur Schätzung eines Aktionssegments nach Anspruch 14, wobei ein Ausmaß des Rauschens, das mit der Geschwindigkeit jeder der Körperpositionen zusammenhängt, größer ist, je größer jede Winkelgeschwindigkeit für jede der Körperpositionen ist.

**Revendications**

**1.** Dispositif de construction de modèle d'estimation de segment d'action (10), s'appliquant à la reconnaissance d'actions à partir d'une vidéo, le dispositif comprenant :

une unité d'apprentissage de probabilité d'observation (11) qui, dans un modèle semi-markovien caché (HSMM), incluant une pluralité de seconds modèles de Markov cachés (HMM) contenant chacun une pluralité de premiers modèles de Markov cachés (HMM) utilisant des types de mouvement d'une personne comme états, et la pluralité de seconds modèles de Markov cachés (HMM) utilisant chacun des actions définies en combinant une pluralité des mouvements comme états, apprend des probabilités d'observation pour chacun des types de mouvement de la pluralité de premiers modèles de Markov cachés (HMM) en utilisant un apprentissage non supervisé ;

une unité d'apprentissage de probabilité de transition (12) qui fixe les probabilités d'observation pour chaque type des mouvements de la pluralité de premiers modèles de Markov cachés (HMM) apprises par apprentissage non supervisé en utilisant l'unité d'apprentissage de probabilité d'observation, qui prend en entrée des premières données supervisées existantes qui présentent une information d'enseignant qui est une information donnant une réponse correcte d'un segment de temps dans lequel chaque action se produit pour des données de série temporelle de posture, qui génère des secondes données supervisées par une augmentation des premières données supervisées d'entrée, et qui apprend des probabilités de transition des mouvements des premiers modèles de Markov cachés (HMM) par un apprentissage supervisé dans lequel les secondes données supervisées sont utilisées avec la probabilité d'observation apprise par l'apprentissage non supervisé fixé ; et

une unité de construction (13) qui construit le modèle semi-markovien caché (HSMM) qui est un modèle pour estimer des segments des actions en utilisant les probabilités d'observation apprises par l'unité d'apprentissage de probabilité d'observation (11) et les probabilités de transition apprises par l'unité d'apprentissage de probabilité de transition (12),

dans lequel l'unité d'apprentissage de probabilité de transition (12) augmente les premières données supervisées en ajoutant une information d'enseignant des premières données supervisées à chaque élément de données généré par au moins l'un parmi un suréchantillonnage dans une direction temporelle ou un suréchantillonnage dans un espace de caractéristiques.

2. Dispositif de construction de modèle d'estimation de segment d'action (10) selon la revendication 1, dans lequel, dans un cas dans lequel le suréchantillonnage dans la direction temporelle est réalisé sur les premières données supervisées :

le suréchantillonnage dans la direction temporelle est réalisé par propagation d'un paramètre original défini aléatoirement, à chaque instant d'horloge, vers des instants d'horloge antérieurs et postérieurs tout en atténuant le paramètre original ; et
à chaque instant d'horloge, une valeur de caractéristique d'un mouvement correspondant à un instant d'horloge d'un paramètre maximal parmi le paramètre original et des paramètres propagés à partir des instants d'horloge antérieurs et postérieurs est sélectionnée comme valeur de caractéristique pour chacun des instants d'horloge.

3. Dispositif de construction de modèle d'estimation de segment d'action (10) selon la revendication 2, dans lequel le paramètre original est atténué de manière à devenir nul à un nombre prédéterminé d'instants d'horloge de distance.

4. Dispositif de construction de modèle d'estimation de segment d'action (10) selon l'une quelconque de la revendication 1 à la revendication 3, dans lequel, dans un cas dans lequel le suréchantillonnage dans l'espace de caractéristiques est réalisé sur les premières données supervisées, le suréchantillonnage dans l'espace de caractéristiques est réalisé en ajoutant un bruit lié à une vitesse de chaque emplacement du corps d'une personne effectuant un mouvement dans les premières données supervisées à une valeur de caractéristique du mouvement pour chaque emplacement du corps.

5. Dispositif de construction de modèle d'estimation de segment d'action (10) selon la revendication 4, dans lequel une grandeur de bruit liée à la vitesse de chacun des emplacements du corps est plus grande au fur et à mesure que chaque vitesse angulaire pour chacun des emplacements du corps est plus élevée.

6. Procédé de construction de modèle d'estimation de segment d'action qui est un procédé mis en œuvre par ordinateur, s'appliquant à la reconnaissance d'actions à partir d'une vidéo, le procédé comprenant :

dans un modèle semi-markovien caché (HSMM) incluant une pluralité de seconds modèles de Markov cachés (HMM) contenant chacun une pluralité de premiers modèles de Markov cachés (HMM) utilisant des types de mouvement d'une personne comme états, et la pluralité de seconds modèles de Markov cachés (HMM) utilisant chacun des actions définies en combinant une pluralité des mouvements comme états, l'apprentissage de probabilités d'observation pour chacun des types de mouvement de la pluralité de premiers modèles de Markov cachés (HMM) en utilisant un apprentissage non supervisé ;

la fixation des probabilités d'observation apprises pour chaque type des mouvements de la pluralité de premiers modèles de Markov cachés (HMM) apprises par apprentissage non supervisé, prenant en entrée des premières données supervisées existantes qui présentent une information d'enseignant qui est une information donnant une réponse correcte d'un segment de temps dans lequel chaque action se produit pour des données de série temporelle de posture, la génération de secondes données supervisées par une augmentation des premières données supervisées d'entrée, et l'apprentissage de probabilités de transition des mouvements des premiers modèles de Markov cachés (HMM) par un apprentissage supervisé dans lequel les secondes données supervisées sont utilisées avec la probabilité d'observation apprise par l'apprentissage non supervisé fixé ; et la construction du modèle semi-markovien caché (HSMM) qui est un modèle pour estimer des segments des actions en utilisant les probabilités d'observation apprises et les probabilités de transition apprises, dans lequel le procédé de construction de modèle d'estimation de segment d'action augmente les premières données supervisées en ajoutant une information d'enseignant des premières données supervisées à chaque élément de données généré par au moins l'un parmi un suréchantillonnage dans une direction temporelle ou un suréchantillonnage dans un espace de caractéristiques.

7.  Procédé de construction de modèle d'estimation de segment d'action selon la revendication 6, dans lequel, dans un cas dans lequel le suréchantillonnage dans la direction temporelle est réalisé sur les premières données supervisées :

    le suréchantillonnage dans la direction temporelle est réalisé par propagation d'un paramètre original défini aléatoirement, à chaque instant d'horloge, vers des instants d'horloge antérieurs et postérieurs tout en atténuant le paramètre original ; et
    à chaque instant d'horloge, une valeur de caractéristique d'un mouvement correspondant à un instant d'horloge d'un paramètre maximal parmi le paramètre original et des paramètres propagés à partir des instants d'horloge antérieurs et postérieurs est sélectionnée comme valeur de caractéristique pour chacun des instants d'horloge.

8.  Procédé de construction de modèle d'estimation de segment d'action selon la revendication 7, dans lequel le paramètre original est atténué de manière à devenir nul à un nombre prédéterminé d'instants d'horloge de distance.

9.  Procédé de construction de modèle d'estimation de segment d'action selon l'une quelconque de la revendication 6 à la revendication 8, dans lequel, dans un cas dans lequel le suréchantillonnage dans l'espace de caractéristiques est réalisé sur les premières données supervisées, le suréchantillonnage dans l'espace de caractéristiques est réalisé en ajoutant un bruit lié à une vitesse de chaque emplacement du corps d'une personne effectuant un mouvement dans les premières données supervisées à une valeur de caractéristique du mouvement pour chaque emplacement du corps.

10. Procédé de construction de modèle d'estimation de segment d'action selon la revendication 9, dans lequel une grandeur de bruit liée à la vitesse de chacun des emplacements du corps est plus grande au fur et à mesure que chaque vitesse angulaire pour chacun des emplacements du corps est plus élevée.

11. Programme de construction de modèle d'estimation de segment d'action, s'appliquant à la reconnaissance d'actions à partir d'une vidéo, qui, lorsqu'il est exécuté par un ordinateur, amène l'ordinateur
    à réaliser un traitement comprenant :

    dans un modèle semi-markovien caché (HSMM) incluant une pluralité de seconds modèles de Markov cachés (HMM) contenant chacun une pluralité de premiers modèles de Markov cachés (HMM) utilisant des types de mouvement d'une personne comme états, et la pluralité de seconds modèles de Markov cachés (HMM) utilisant chacun des actions définies en combinant une pluralité des mouvements comme états, l'apprentissage de probabilités d'observation pour chacun des types de mouvement de la pluralité de premiers modèles de Markov cachés (HMM) en utilisant un apprentissage non supervisé ;
    la fixation des probabilités d'observation apprises pour chaque type des mouvements de la pluralité de premiers modèles de Markov cachés (HMM) apprises par apprentissage non supervisé, prenant en entrée des premières données supervisées existantes qui présentent une information d'enseignant qui est une information donnant une réponse correcte d'un segment de temps dans lequel chaque action se produit pour des données de série temporelle de posture, la génération de secondes données supervisées par une augmentation des premières données supervisées d'entrée, et l'apprentissage de probabilités de transition des mouvements des premiers modèles de Markov cachés (HMM) par un apprentissage supervisé dans lequel les secondes données supervisées sont utilisées avec la probabilité d'observation apprise par l'apprentissage non supervisé fixé ; et la construction du modèle semi-markovien caché (HSMM) qui est un modèle pour estimer des segments des actions en utilisant les probabilités d'observation apprises et les probabilités de transition apprises,

dans lequel, dans le traitement, une augmentation est réalisée sur les premières données supervisées en ajoutant une information d'enseignant des premières données supervisées à chaque élément de données généré par au moins l'un parmi un suréchantillonnage dans une direction temporelle ou un suréchantillonnage dans un espace de caractéristiques.

12. Programme de construction de modèle d'estimation de segment d'action selon la revendication 11, dans lequel, dans un cas dans lequel le suréchantillonnage dans la direction temporelle est réalisé sur les premières données supervisées :

le suréchantillonnage dans la direction temporelle est réalisé par propagation d'un paramètre original défini aléatoirement, à chaque instant d'horloge, vers des instants d'horloge antérieurs et postérieurs tout en atténuant le paramètre original ; et

à chaque instant d'horloge, une valeur de caractéristique d'un mouvement correspondant à un instant d'horloge d'un paramètre maximal parmi le paramètre original et des paramètres propagés à partir des instants d'horloge antérieurs et postérieurs est sélectionnée comme valeur de caractéristique pour chacun des instants d'horloge.

13. Programme de construction de modèle d'estimation de segment d'action selon la revendication 12, dans lequel le paramètre original est atténué de manière à devenir nul à un nombre prédéterminé d'instants d'horloge de distance.

14. Programme de construction de modèle d'estimation de segment d'action selon l'une quelconque de la revendication 11 à la revendication 13, dans lequel, dans un cas dans lequel le suréchantillonnage dans l'espace de caractéristiques est réalisé sur les premières données supervisées, le suréchantillonnage dans l'espace de caractéristiques est réalisé en ajoutant un bruit lié à une vitesse de chaque emplacement du corps d'une personne effectuant un mouvement dans les premières données supervisées à une valeur de caractéristique du mouvement pour chaque emplacement du corps.

15. Programme de construction de modèle d'estimation de segment d'action selon la revendication 14, dans lequel une grandeur de bruit liée à la vitesse de chacun des emplacements du corps est plus grande au fur et à mesure que chaque vitesse angulaire pour chacun des emplacements du corps est plus élevée.

# FIG.1

# FIG.2

OBSERVATION PROBABILITY LEARNING SECTION — 11

TRANSITION PROBABILITY LEARNING SECTION — 12

BUILDING SECTION — 13

10

# FIG.3

FIG.4

EP 4 287 078 B1

# FIG.5

| | CLOCK-<br>TIME 1 | CLOCK-<br>TIME 2 | CLOCK-<br>TIME 3 | CLOCK-<br>TIME 4 | CLOCK-<br>TIME5 | CLOCK-<br>TIME 6 | CLOCK-<br>TIME 7 | CLOCK-<br>TIME 8 | CLOCK-<br>TIME 9 | CLOCK-<br>TIME 10 |
|---|---|---|---|---|---|---|---|---|---|---|
| ORIGINAL | $x_1$ | $x_2$ | $x_3$ | $x_4$ | $x_5$ | $x_6$ | $x_7$ | $x_8$ | $x_9$ | $x_{10}$ |
| SELECTED | $x_1$ | $x_1$ | $x_1$ | $x_4$ | $x_5$ | $x_7$ | $x_7$ | $x_8$ | $x_8$ | $x_8$ |

# FIG.6

FIG.7

# FIG.8

CLOCK-TIME 2  CLOCK-TIME 3  CLOCK-TIME 4  CLOCK-TIME 5  CLOCK-TIME 6

1    2    2    2    3

MOVEMENT 1    MOVEMENT 2    MOVEMENT 3

CLOCK-TIME 1  CLOCK-TIME 2  CLOCK-TIME 3  CLOCK-TIME 4  CLOCK-TIME 5  CLOCK-TIME 6

1    2    2    2    2    3

MOVEMENT 0    MOVEMENT 1    MOVEMENT 2    MOVEMENT 3

CLOCK-TIME 1  CLOCK-TIME 2  CLOCK-TIME 3  CLOCK-TIME 4  CLOCK-TIME 5  CLOCK-TIME 6

0    1    1    2    3    3

EP 4 287 078 B1

FIG.9

# FIG.10

EP 4 287 078 B1

# FIG.11

```
        ( START )
            │
  ┌─────────────────────┐
  │┃ EXTRACT FEATURE    ┃│ ── 101
  │┃     VECTORS        ┃│
  └─────────────────────┘
            │
  ┌─────────────────────┐
  │ PERFORM UNSUPERVISED │
  │ LEARNING OF OBSERVATION│ ── 102
  │    PROBABILITIES     │
  └─────────────────────┘
            │
  ┌─────────────────────┐
  │ AUGMENT SUPERVISED   │ ── 103
  │        DATA          │
  └─────────────────────┘
            │
  ┌─────────────────────┐
  │  ALLOCATE FEATURE    │ ── 104
  │     VECTORS          │
  └─────────────────────┘
            │
  ┌─────────────────────┐
  │  PERFORM SUPERVISED  │
  │ LEARNING OF TRANSITION│ ── 105
  │    PROBABILITIES     │
  └─────────────────────┘
            │
  ┌─────────────────────┐
  │   SET PROBABILITY    │
  │   DISTRIBUTION OF    │ ── 106
  │ SUCCESSIVE DURATIONS │
  └─────────────────────┘
            │
  ┌─────────────────────┐
  │     BUILD HSMM       │ ── 107
  └─────────────────────┘
            │
         ( END )
```

# FIG.12

```
        ┌─────────────────────────┐
        │    FEATURE VECTOR        │
        │     EXTRACTION           │
        └─────────────────────────┘
                    │
        ┌─────────────────────────┐
        │ ACQUIRE POSTURE INFORMATION │──── 151
        └─────────────────────────┘
                    │
        ┌─────────────────────────┐
        │    ACQUIRE TIME SERIES   │──── 152
        │    POSTURE INFORMATION   │
        └─────────────────────────┘
                    │
        ┌─────────────────────────┐
        │    ACQUIRE TIME SERIES   │──── 153
        │    MOTION INFORMATION    │
        └─────────────────────────┘
                    │
        ┌─────────────────────────┐
        │  COMPUTE FEATURE VECTORS │──── 154
        └─────────────────────────┘
                    │
              ┌──────────┐
              │  RETURN  │
              └──────────┘
```

# FIG.13

AUGMENT
SUPERVISED DATA

GENERATE RANDOM NUMBER — 251

PROPAGATE BEFORE
AND AFTER — 252

SELECT FEATURE VALUE — 253

COMPUTE GAUSSIAN
DISTRIBUTION — 254

ADD NOISE — 255

RETURN

# FIG.14

START

EXTRACT FEATURE VECTORS — 201

ESTIMATE SUCCESSIVE DURATIONS — 202

ESTIMATE ACTION SEGMENTS — 203

END

# FIG.15

(1) RAISE ARM
(2) LOWER ARM
(3) EXTEND ARM FORWARD
(4) BRING BOTH HANDS
    CLOSE TOGETHER
    IN FRONT OF BODY
(5) MOVE FORWARD
(6) MOVE SIDEWAYS
(7) SQUAT
(8) STAND

a31

(1)⇨(3)⇨(1)⇨(4)⇨(7)

a32

(7)⇨(4)⇨(8)⇨(5)⇨(3)

FIG.16

# FIG.17

FIG.18

EP 4 287 078 B1

## FIG.19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RYUICHI YAMAMOTO** ; **SHINJI SAKO** ; **TADASHI KITAMURA**. Real-time Music Audio Signal to Score Alignment Using a Hybrid Hidden Semi-Markov Model and Linear Dynamical System. *Proceedings of the International Society for Music Information Retrieval (MUS)*, 2012
- **SHUN-ZHENG YU**. Hidden Semi-Markov Models. *Artificial Intelligence*, 02 February 2010, vol. 174, 215-243

- **KEI WAKABAYASHI** ; **TAKAO MIURA**. Efficient Parameter Estimation for Hierarchical Hidden Markov Models. *in transactions of Institute of Electronics, Information and Communication Engineers*, 2011
- Capturing and Understanding Workers' Activities in Far-Field Surveillance Videos with Deep Action Recognition and Bayesian Nonparametric Learning. **XIAOCHUN LUO et al.** COMPUTER-AIDED CIVIL AND INFRASTRUCTURE ENGINEERING. BLACKWELL PUBLISHERS, 08 October 2018, vol. 34